# EUROPEAN PATENT APPLICATION

(11) **EP 2 527 889 A1**
(43) Date of publication of application: **28.11.2012**
(21) Application number: 11167482.6
(22) Date of filing: 25.05.2011
(51) Int. Cl.: G02B 6/00

(54) **Backlight module with three-dimensional circuit structure and extrusion Housing**

(71) Applicant: Kocam International Co.Ltd., Sanchong Dist New Taipei City 241 (CN)
(72) Inventor: Chen, Tsan-Jung, 241, New Taipei City (TW)
(74) Representative: Harrison, Robert John

(57) **Abstract**

The present invention relates to a backlight module with three-dimensional circuit structure and extrusion housing, comprising: an extrusion housing, a three- dimensional circuit layer, a plurality of light-emitting devices, a reflective layer, a light guide plate, and a thermal conductive layer, wherein an installation portion of the extrusion housing has a plurality of concave holes in the first surface thereof, and the three-dimensional circuit layer is disposed on the first surface of the installation portion, the side walls of the plurality of concave holes, and the bottoms of the concave holes; Thus, the complete circuit can be disposed in the limited-sized installation portion; Moreover, moreover, the three-dimensional circuit layer further has a plurality of welding points disposed on the bottoms of the concave holes, such that the light-emitting devices can be respectively disposed in the concave holes by way of being welded on the welding points; So that, when the liquid crystal display device is hit, the extrusion housing may protect the light-emitting devices from damage.

## Description

### BACKGROUND OF THE INVENTION

### 1. Technical Field

The present invention relates to a backlight module, and more particularly, to a backlight module with three-dimensional circuit structure and extrusion housing.

### 2. Description of Related Art

Recently, light-emitting diode (LED) is widely applied in illumination apparatuses. Because LED would get very hot when it is emitting, a conventional LED illumination apparatus commonly includes radiation materials or heat-dissipating device.

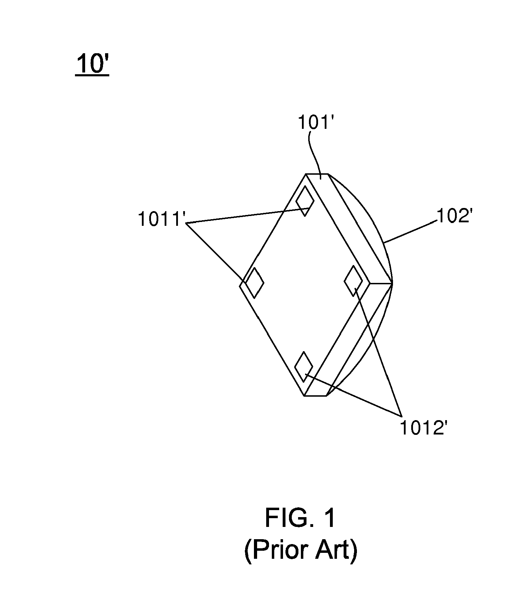

Please refer to FIG. 1, which illustrates a stereo view of a conventional LED device. As shown in FIG. 1, conventional LED device 10' includes: a substrate 101' and a plastic body 102', wherein at least one LEDchip is disposed on the surface of the substrate 101'; moreover, opposite to the LED chip, a plurality of metal pins are disposed on the another surface of the substrate 101'. The plurality of metal pins includes: two positive electrodes 1011' and two negative electrodes 1012'.

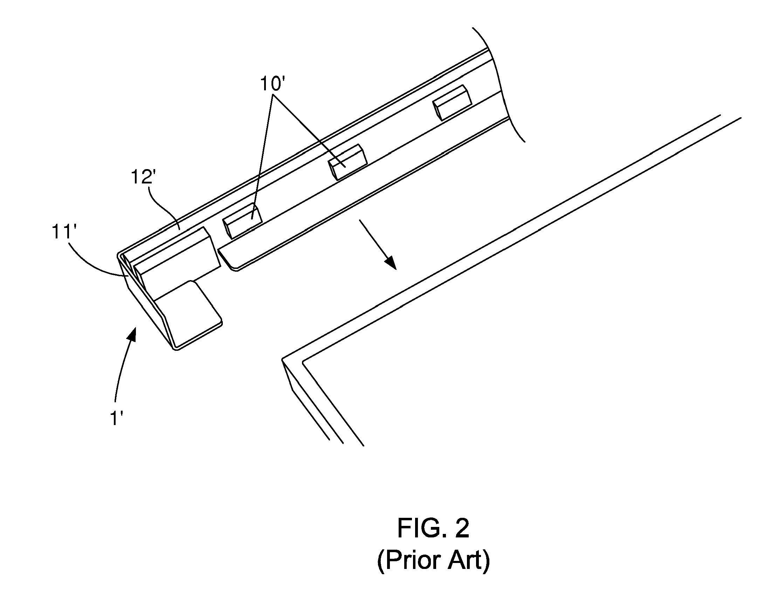

Continuously referring to FIG. 1, and simultaneously referring to FIG. 2, which illustrates a stereo diagram of a conventional LED backlight module. As shown in FIG. 2, the conventional LED backlight module 1' is installed in a main frame of a liquid crystal display device, used for providing a backlight to a light guide plate (not shown in FIGs.). The conventional LED backlight module 1' includes: a housing 11', a printed circuit board 12' and a plurality of LED devices 10'. The LED devices 10' are mounted on the printed circuit board 12', moreover, the printed circuit board 12' and the LED devices 10' are accommodated by the housing 11". In addition, an electronic circuit is printed on the printed circuit board 12', wherein the electronic circuit has a plurality of welding points for soldering the LED devices 10'.

The aforesaid LED backlight module 1' has two advantages: (1) simple structure; and (2) easy to be installed in the main frame. Thus, the LED backlight module 1' is widely applied in various liquid crystal display devices for providing the backlight to the light guide plate. However, with the change in user habits, it is requested to be manufactured as a thin liquid crystal display device regardless of the large-sized liquid crystal display device or the small-sized liquid crystal display device. However, for the LED backlight module applied in the thin liquid crystal display device, it must face a great challenge, i.e., the complete and complex electronic circuit must be printed on a limit-sized printed circuit board. Besides, the housing 11' in the conventional LED backlight module 1' is made by way of impact processing a metal foil with thin thickness; thus, it is able to know that the housing 11' can not effectively protect the LED devices 10' when the LED backlight module 1' is hit.

Thus, in view of the conventional LED backlight module still has shortcomings and drawbacks, the inventor of the present application has made great efforts to make inventive research thereon and eventually provided a backlight module with three-dimensional circuit structure and extrusion housing.

### BRIEF SUMMARY OF THE INVENTION

The first objective of the present invention is to provide a backlight module with three-dimensional circuit structure and extrusion housing, in which a plurality of concave holes are formed in an installation portion of an extrusion housing, a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer, so that the complete circuit can be disposed in the limit-sized installation portion, and the backlight module with three-dimensional circuit structure and extrusion housing can be applied to a thin liquid crystal display device; Besides, when the liquid crystal display device is hit, the extrusion housing can protect the light-emitting devices from damage.

Accordingly, to achieve the first objective of the present invention, the inventor proposes a backlight module with three-dimensional circuit structure and extrusion housing, comprising:
an extrusion housing, comprising: a bottom portion; at least one protrusion portion, formed on the bottom portion; and an installation portion, connected with the bottom portion and has a plurality of concave holes formed on a first surface thereof;
a three dimensional layer, disposed on the first surface of the installation portion, the side walls of the concave holes and the bottoms of the concave holes, moreover, the three-dimensional circuit layer further has a plurality of welding points disposed on the bottoms of the concave holes;
a plurality of light-emitting devices, respectively disposed, in the concave holes by way of being welded on the welding points;
a reflective layer, disposed in the extrusion housing and has a plurality of holes, wherein the reflective layer is opposite to the light-emitting devices, so that the light-emitting surfaces of the light-emitting devices are able to be exposed out of the reflective layer through the plurality of holes, respectively;
a light guide plate, opposite to the reflective layer and disposed in the extrusion housing, used for receiving the light emitted by the light-emitting devices; and
a thermal conductive layer, attached to the outer surface of the bottom of the extrusion housing.

The second objective of the present invention is to provide a backlight module with three-dimensional circuit structure and extrusion housing, in which a groove is formed in an installation portion of an extrusion housing and a plurality of spacers are disposed in the groove for forming a plurality of concave holes, and then a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer, so that, the complete circuit can be disposed in the limit-sized installation portion, and the backlight module with three-dimensional circuit structure and extrusion housing can be applied to a thin liquid crystal display device; Besides, when the liquid crystal display device is hit, the extrusion housing can protect the light-emitting devices from damage.

Thus, to achieve the second objective of the present invention, the inventor proposes a backlight module with three-dimensional circuit structure and extrusion housing, comprising:
an extrusion housing, comprising: a bottom portion; at least one protrusion portion, formed on the bottom portion; and an installation portion, connected with the bottom portion and has a groove formed on a first surface thereof and a plurality of spacers disposed in the groove,
wherein two adjacent spacers in the groove form one concave hole;
a three dimensional, layer, disposed on the first surface of the installation portion, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the extrusion housing and has a plurality of holes, wherein the reflective layer is opposite to the light-emitting devices, so that the light-emitting surfaces of the light-emitting devices are able to be exposed out of the reflective layer through the plurality of holes, respectively;
a light guide plate, opposite to the reflective layer and disposed in the extrusion housing, used for receiving the light emitted by the light-emitting devices; and
a thermal conductive layer, attached to the outer surface of the bottom of the extrusion housing.

The third objective of the present invention is to provide a backlight module with three-dimensional circuit structure and extrusion housing, in which a plurality of spacers are disposed on the surface of an installation portion of an extrusion, so as to form a plurality of concave holes on the installation portion, and a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer, so that, the complete circuit can be disposed in the limit-sized installation portion, and the backlight module with three-dimensional circuit structure and extrusion housing can be applied to a thin liquid crystal display device; Besides, when the liquid crystal display device is hit, the extrusion housing can protect the light-emitting devices from damage.

So that, to achieve the third objective of the present invention, the inventor proposes a backlight module with three-dimensional circuit structure and extrusion housing, comprising:
an extrusion housing, comprising: a bottom portion; at least one protrusion portion, formed on the bottom portion; and an installation portion, connected with the bottom portion and has a plurality of spacers disposed on a first surface thereof, wherein two adjacent spacers in the groove form one concave hole;
a three dimensional layer, disposed on the first surface of the installation portion, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the extrusion housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, opposite to the reflective layer and disposed in the extrusion housing, used for receiving the light emitted by the light-emitting devices; and
a thermal conductive layer, being attached to the outer surface of the bottom of the extrusion housing.

### BRIEF DESCRIPTION OF THE SEVERAL VIEWS OF THE DRAWINGS

The invention as well as a preferred mode of use and advantages thereof will be best understood by referring to the following detailed description of an illustrative embodiment in conjunction with the accompanying drawings, wherein:
FIG. 1 is a stereo view of a conventional LED device;
FIG. 2 is a stereo diagram of a conventional LED backlight module;
FIG. 3 is a side view of a first embodiment of a backlight module with three-dimensional circuit structure and extrusion housing according to the present invention;
FIG. 4 is a stereo diagram of an extrusion housing, a three-dimensional circuit layer, a plurality of light-emitting devices, and a reflective layer in the first embodiment of the backlight module with three-dimensional circuit structure and extrusion housing;
FIG. 5A and FIG. 5B are schematic processing diagrams of forming a three-dimensional circuit layer on an installation portion of the extrusion housing;
FIG. 6 is a side view of a second embodiment of the backlight module with three-dimensional circuit structure and extrusion housing according to the present invention;
FIG. 7 is a stereo diagram of an extrusion housing, a three-dimensional circuit layer and a plurality of light-emitting devices in the second embodiment of the backlight module with three-dimensional circuit structure and extrusion housing;
FIG. 8 is the stereo diagram of the extrusion housing, the three-dimensional circuit layer, the plurality of light-emitting devices, and a reflective layer in the second embodiment of the backlight module with three-dimensional circuit structure and extrusion housing;
FIG. 9 is a second stereo diagram of the extrusion housing, the three-dimensional circuit layer and the plurality of light-emitting devices in the second embodiment of the backlight module with three-dimensional circuit structure and extrusion housing;
FIG. 10 is a side view of a third embodiment of the backlight module with three-dimensional circuit structure and extrusion housing according to the present invention; and
FIG. 11 is a stereo diagram of an extrusion housing, a three-dimensional circuit layer, a plurality of light-emitting devices, and a reflective layer in the third embodiment of the backlight module with three-dimensional circuit structure and extrusion housing.

### DETAILED DESCRIPTION OF THE INVENTION

To more clearly describe a backlight module with three-dimensional circuit structure and extrusion housing according to the present invention, embodiments of the present invention will be described in detail with reference to the attached drawings hereinafter.

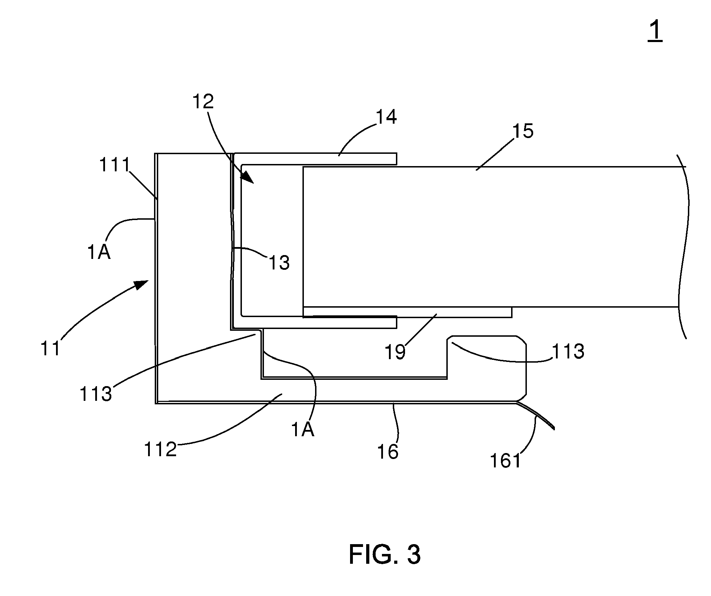

The present invention provides multi embodiments for describing the backlight module with three-dimensional circuit structure, please refer to FIG. 3, which illustrates a side view of a first embodiment of the backlight module with three-dimensional circuit structure and extrusion housing according to the present invention. As shown in FIG. 3, the backlight module 1 with three-dimensional circuit structure and extrusion housing includes: an extrusion housing 11, a three-dimensional circuit layer 12, a plurality of light-emitting devices 13, a reflective layer 14, a light guide plate 15, a thermal conductive layer 16, and a bottom reflector 19, wherein the manufacture material of the extrusion housing 11 can be copper, aluminum, electrolytic zinc steel plate, or hot-dip galvanization steel plate.

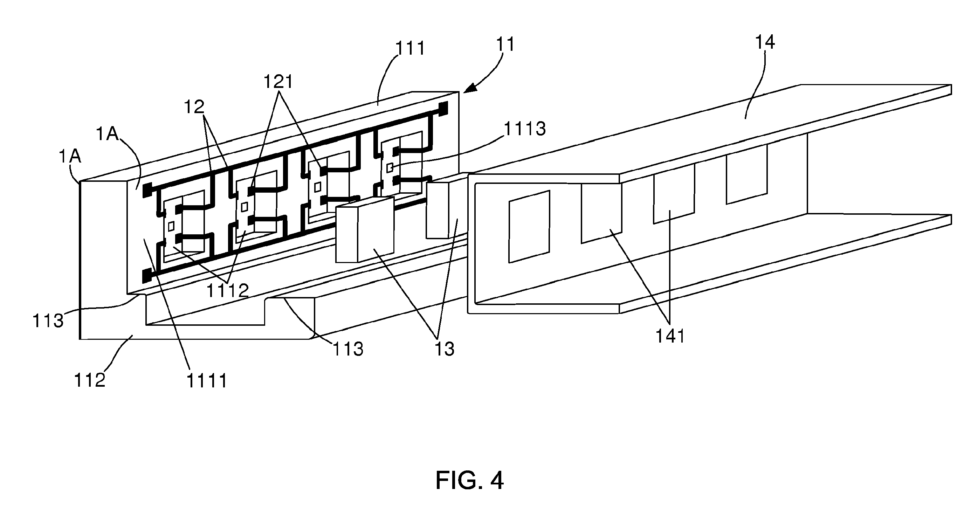

Continuously referring to FIG. 3, and simultaneously referring to FIG. 4, which illustrates a stereo diagram of the extrusion housing, the three-dimensional circuit layer, the plurality of light-emitting devices, and the reflective layer in the first embodiment of the backlight module with three-dimensional circuit structure and extrusion housing. As shown in FIG. 3 and FIG. 4, the extrusion housing 11 includes: a bottom portion 112, two protrusion portions 113, an installation portion 111, wherein the two protrusion portions 113 are formed on the bottom portion 112, and the installation portion 111 is connected with the bottom portion 112 and has a plurality of concave holes 1112 formed on a first surface 1111 thereof. The three dimensional layer 12 is disposed on the first surfaces 1111 of the installation portion 111, the side walls of the concave holes 1112 and the bottoms of the concave holes 1112, moreover, the three-dimensional circuit layer 12 further includes a plurality of welding points 121 disposed on the bottoms of the concave holes 1112.

Referring to FIG. 3 and FIG. 4 again, the light-emitting device 13 can be packaged-type LED chip and COB-type LED chip, and the plurality of light-emitting devices 13 are respectively disposed in the concave holes 1112 by way of being welded on the welding points 121. The reflective layer 14 is disposed in the extrusion housing 11 and has a plurality of holes 141, wherein the reflective layer 14 is opposite to the light-emitting devices 13, so that the light-emitting surfaces of the light-emitting devices 13 are able to be exposed out of the reflective layer 14 through the plurality of holes 141, respectively. Moreover, the reflective layer 14 can be formed in the housing 11 by coating process, painting process and spraying process, or, the reflective layer 14 can be a reflector and be disposed in the housing 11 after bent as a Π-shaped reflector or an L-shaped reflector, and one end of the Π-shaped reflector or the L-shaped reflector has a reflector tassel, used for tightly attaching to the light guide plate 15 when the light guide plate 15 is disposed in the housing 11. The light guide plate 15 is opposite to the reflective layer 14 and disposed in the extrusion housing 11 for receiving the light emitted by the light-emitting devices 13. The thermal conductive layer 16 is attached to the outer surface of the bottom of the extrusion housing 11, wherein, one end of the thermal conductive layer 16 is formed a tassel portion 161, which is used for being attached to a bottom plate when the backlight module 1 is installed in a main frame of a liquid crystal display device. The bottom reflector 19 is disposed on the bottom of the light guide plate 15 for preventing from light leakage.

Thus, the framework of the first embodiment of the backlight module with three-dimensional circuit structure and extrusion housing has been clearly introduced. In the first embodiment of the backlight module with three-dimensional circuit structure, when the light-emitting devices 13 emit, the heat produced by the light-emitting devices 13 can be dissipated by the housing 11; Moreover, the heat can be further evenly distributed in the bottom plate since the tassel portion 161 is attached to the bottom plate of the main frame. Besides, two thermal conductive materials 1A are respectively disposed on the first surface 1111 of the installation portion 111 and the outer surface of the extrusion housing 11, used for assisting in heat dissipation. Moreover, the thermal conductive material 1A can be further extended to the bottom plate of the main frame along the inner surface of the extrusion housing 11; thus, when the plurality of light-emitting devices 13 emitted, the heat produced by the light-emitting devices 13 is able to be bi-directionally dissipated through the thermal conductive layer 16 and the thermal conductive material 1A.

Besides, what must be especially noted is that, because the material of the extrusion housing 11 is metal, the concave holes of the installation portion 111 can be made by using electrochemical machining process, impact process, drilling and boring process, extrusion process, or drawing process; Moreover, as shown in FIG. 4, when processing the concave holes 1112, a through hole 1113 is simultaneously formed on the bottom of each the concave hole 1112, adopted for desoldering the light-emitting device 13. Furthermore, after the through holes 1113 are respectively formed on the bottoms of the concave holes 1112, an insulating film (not shown in FIGs.) is formed on the bottom of each the concave hole 1112, used for covering the non-welding district on the bottom of the concave hole 1112.

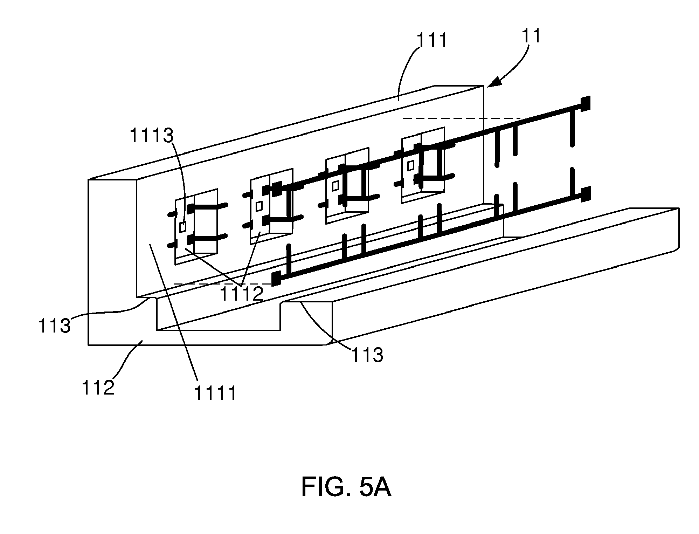

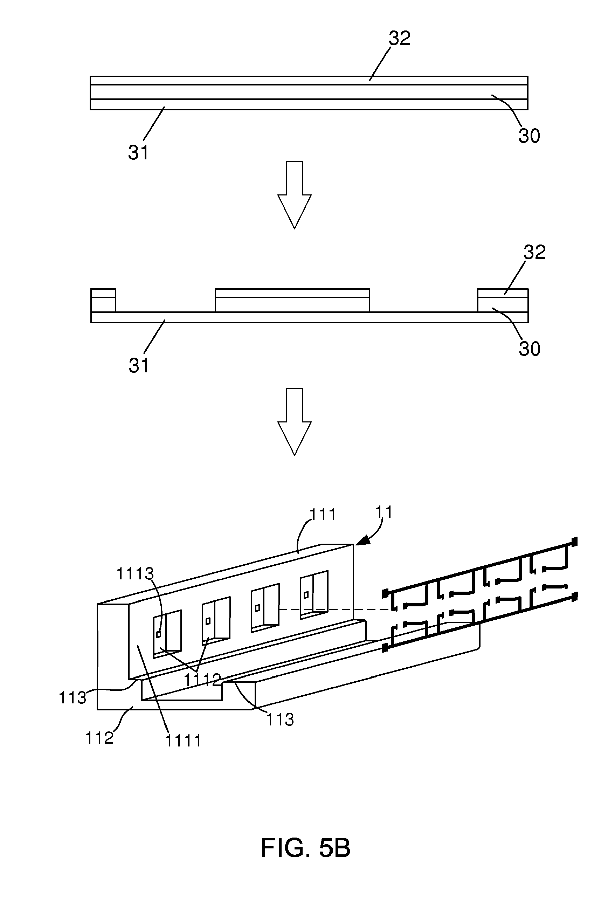

In addition, please refer to FIG. 5A and FIG. 5B, there are shown schematic processing diagrams of forming the three-dimensional circuit layer on the installation portion of the extrusion housing. As shown in FIG. 5A and FIG. 5B, the three-dimensional circuit layer 12 can be disposed on the first surface 1211 of the installation portion 111, the side walls of the concave holes 1112 and the bottoms of the concave holes 1112 through the following three ways:
Way 1: As shown in FIG. 5A, to twice bend a plurality of foils and to attached the foils to the side walls of the concave holes 1112 and the bottoms of the concave holes 1112 via a heat-conductive insulating adhesive, respectively; and then, disposing a metal circuit layer on the first surface 1111 of the instillation portion 1111 for connecting the foils.
Way 2: As shown in FIG. 5A, firstly, spraying the insulating films to the side walls of the concave holes 1112 and the bottoms of the concave holes 1112; then, twice bending a plurality of foils and welding the foils to the side walls of the concave holes 1112 and the bottoms of the concave holes 1112; and then, disposing a metal circuit layer on the first surface 1111 of the installation portion 111 for connecting the foils.
Way 3: As shown in FIG. 5B, firstly, attaching a protection film 31 and a heat-conductive insulating adhesive 32 to the front side and the rear side of a foil 30; then, forming circuit patterns on the heat-conductive insulating adhesive 32 by way of lithography and etching; and then, using the protection film 31 as a centrifugal film and attaching the heat-conductive insulating adhesive 32 and the foil 30 to the first surface 1111 of the installation portion 111, the side walls of the concave holes 1112 and the bottoms of the concave holes 1112 by way of the centrifugal film.

The backlight module with three-dimensional circuit structure and extrusion housing further includes a second embodiment, please refer to FIG, 6, which illustrates a side view of the second embodiment of the backlight module with three-dimensional circuit structure and extrusion housing according to the present invention. Similar to aforesaid first embodiment, the second embodiment of the backlight module 1 with three-dimensional circuit structure and extrusion housing includes: the extrusion housing 11, the three-dimensional circuit layer 12, the plurality of light-emitting devices 13, the reflective layer 14, the light guide plate 15, the bottom reflector 19, and the thermal conductive material 1A, wherein the extrusion housing 11, the three-dimensional circuit layer 12, the plurality of light-emitting devices 13, the reflective layer 14, the light guide plate 15, the bottom reflector 19, and the thermal conductive material 1A in the second embodiment is the same to those in first embodiment.

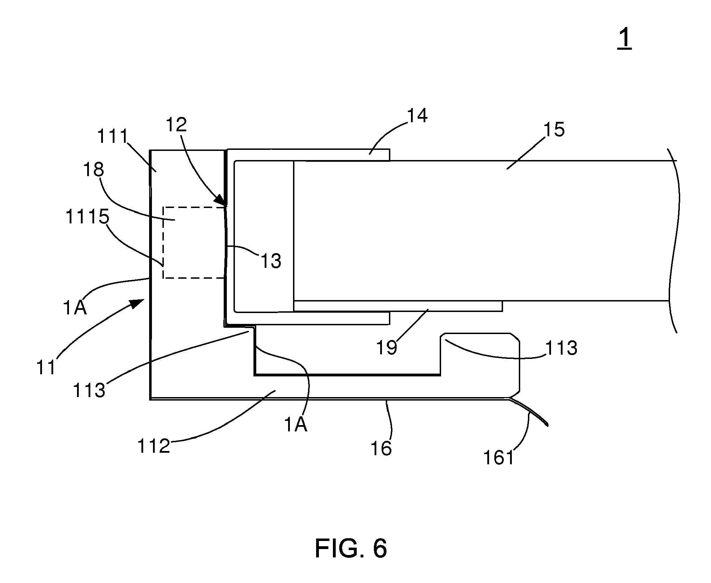

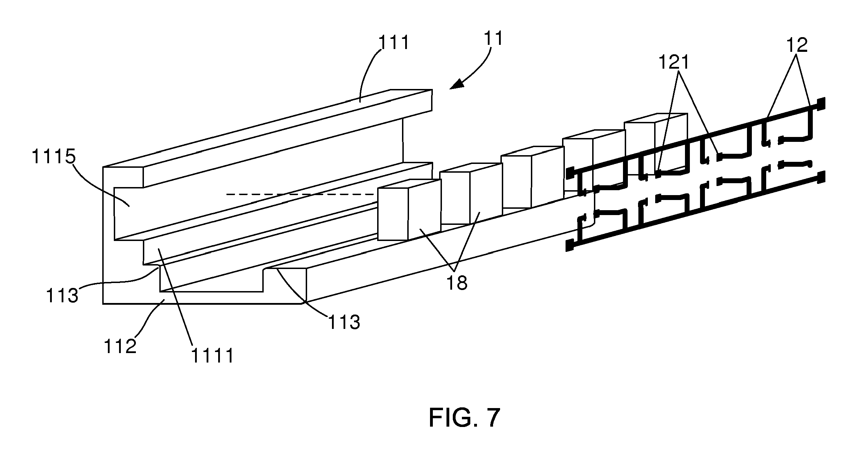

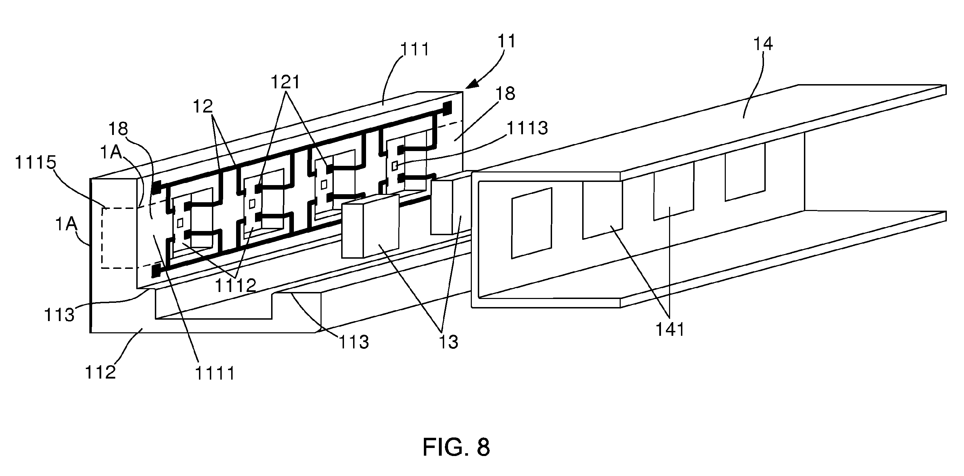

Continuously referring to FIG. 6, and simultaneously referring to FIG. 7, which illustrates the stereo diagram of the extrusion housing, the three-dimensional circuit layer and the plurality of light-emitting devices in the second embodiment of the backlight module with three-dimensional circuit structure and extrusion housing; Moreover, please also referring to FIG. 8, which illustrates the stereo diagram of the extrusion housing, the three-dimensional circuit layer, the plurality of light-emitting devices, and the reflective layer in the second embodiment of the backlight module with three-dimensional circuit structure and extrusion housing. As shown in FIG. 7 and FIG. 8, different from the first embodiment, in the second embodiment of the backlight module 1, the installation portion 111 connected with the bottom portion 112 has a groove 1115 formed on the first surface 1111 thereof, and a plurality of spacers 18 are disposed in the groove 1115, wherein two adjacent spacers 18 in the groove 1115 form one concave hole 1112. The three dimensional layer 12 is disposed on the first surface 1111 of the installation portion 111, the side walls of the concave holes 1112 and the bottoms of the concave holes 1112, moreover, the three-dimensional circuit layer 12 further having a plurality of welding points 121 disposed on the bottoms of the concave holes 1112.

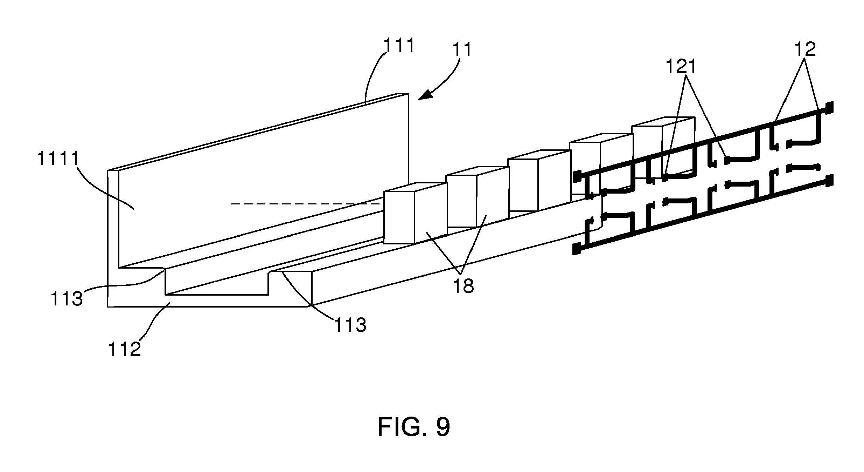

Thus, through above descriptions, the first embodiment and the second embodiment of the backlight module with three-dimensional circuit structure and extrusion housing have been clearly described. However, what must be especially noted is that, for the backlight module with three-dimensional circuit structure and extrusion housing of the present invention, the concave holes 1112 are not limited be formed on the installation portion 111 by processing way. Please refer to FIG. 9, which illustrates a second stereo diagram of the extrusion housing, the three-dimensional circuit layer and the plurality of light-emitting devices in the second embodiment of the backlight module with three-dimensional circuit structure and extrusion housing. As shown in FIG. 9, the plurality of spacers 18 are disposed on the first surface 1111 of the installation portion 111, so as to form the concave holes 1112 on the installation portion 111.

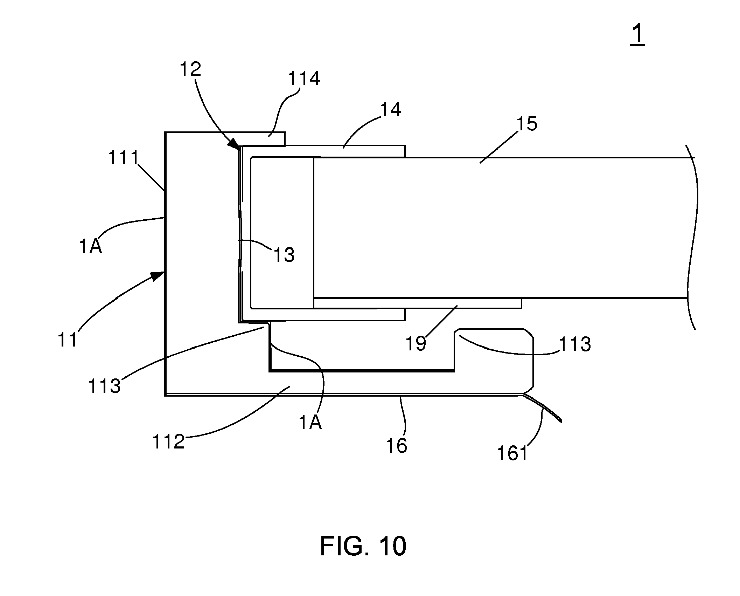

The backlight module with three-dimensional circuit structure and extrusion housing of the present invention further includes a third embodiment. Please refer to FIG. 10, which illustrates a side view of the third embodiment of the backlight module with three-dimensional circuit structure and extrusion housing according to the present invention. Similar to aforesaid first embodiment, the third embodiment of the backlight module 1 with three-dimensional circuit structure and extrusion housing includes: the extrusion housing 11, the three-dimensional circuit layer 12, the plurality of light-emitting devices 13, the reflective layer 14, the light guide plate 15, the thermal conductive layer 16, the bottom reflector 19, and the thermal conductive material 1A, wherein extrusion housing 11, the three-dimensional circuit layer 12, the plurality of light-emitting devices 13, the reflective layer 14, the light guide plate 15, the thermal conductive layer 16, the bottom reflector 19, and the thermal conductive material 1A in the third embodiment is the same those in the first embodiment,

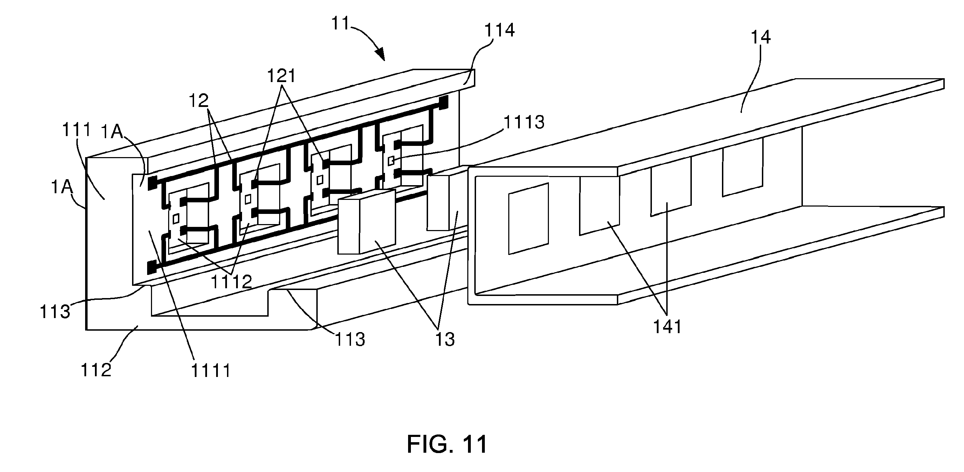

Continuously referring to FIG. 10, and simultaneously referring to FIG. 11, which illustrates the stereo diagram of the extrusion housing, the three-dimensional circuit layer, the plurality of light-emitting devices, and the reflective layer in the third embodiment of the backlight module with three-dimensional circuit structure and extrusion housing. As shown in FIG. 10 and FIG. 11, different from the first embodiment, in the third embodiment of the backlight module 1, the extrusion housing 11 further includes an extension portion 114, wherein the extension portion 114 is connected with the installation portion 111 and protruded outward from the first surface 1111 of the installation portion 111; Moreover, an accommodating space is formed between the extension portion 114 and the protrusion portion 113.

Thus, through the above descriptions, the backlight module with three-dimensional circuit structure and extrusion housing of the present invention has been disclosed completely and clearly in the above description. In summary,the present invention has the following advantages:
1. By way of making the concave holes on the installation portion of the extrusion housing and disposing the three-dimensional layer on the surface of the installation portion, the side walls of the concave holes and the bottoms of the concave holes, the complete circuit can be disposed in the limit-sized installation portion, such that the backlight module with three-dimensional circuit structure and extrusion housing can be applied to a thin liquid crystal display device.
2. Inheriting to above point 1, the three-dimensional circuit layer can be disposed on the first surface of the installation portion, the side walls of the concave holes and the bottoms of the concave holes through three ways.
3. Inheriting to above point 1, the concave holes are not limited be formed on the installation portion by processing way, the concave holes can also be formed on the installation portion by means of disposing the plurality of spacers on the first surface of the installation portion.
4. The extrusion housing can protect the light-emitting devices, so that it does not worry about that the light-emitting devices would be damaged when the liquid crystal display device is hit
5. Inheriting to above point 1, to dispose the light-emitting devices in the concave holes can also fix the light-emitting devices and prevent the light-emitting devices from displacement.

The above description is made on embodiments of the present invention. However, the embodiments are not intended to limit scope of the present invention, and all equivalent implementations or alterations within the spirit of the present invention still fall within the scope of the present invention.

## Claims

1. A backlight module with three-dimensional circuit structure and extrusion housing, comprising:
an extrusion housing, comprising:
a bottom portion;
at least one protrusion portion, being formed on the bottom portion; and
an installation portion, being connected with the bottom portion and having a plurality of concave holes formed on a first surface thereof;
a three dimensional layer, being disposed on the first surface of the installation portion, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the extrusion housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the extrusion housing, used for receiving the light emitted by the light-emitting devices; and
a thermal conductive layer, being attached to the outer surface of the bottom of the extrusion housing.

2. The backlight module with three-dimensional circuit structure and extrusion housing of Claim 1, further comprising a bottom reflector, being disposed on the bottom of the light guide plate for preventing from light leakage.

3. The backlight module with three-dimensional circuit structure and extrusion housing of Claim 1, wherein the concave holes of the installation portion is made by using a processing method selected from the group consisting of: electrochemical machining process, impact process, drilling and boring process, extrusion process, and drawing process

4. The backlight module with three-dimensional circuit structure and extrusion housing of Claim 1, wherein a through hole is formed on the bottom of the plurality of concave holes, respectively, adopted for desoldering the light-emitting devices.

5. The backlight module with three-dimensional circuit structure and extrusion housing of Claim 1, wherein a plurality of insulating films are formed on the bottoms of the plurality of concave holes, the insulating film is used for covering the non-welding district on the bottom of the concave hole.

6. The backlight module with three-dimensional circuit structure and extrusion housing of Claim 1, wherein the extrusion housing further comprises an extension portion, being connected with the installation portion and protruded outward from the first surface of the installation portion.

7. The backlight module with three-dimensional circuit structure and extrusion housing of Claim 1, wherein two thermal conductive materials are respectively disposed on the first surface of the installation portion and the outer surface of the extrusion housing, used for assisting in heat dissipation.

8. A backlight module with three-dimensional circuit structure and extrusion housing, comprising:
an extrusion housing, comprising:
a bottom portion;
at least one protrusion portion, being formed on the bottom portion; and
an installation portion, being connected with the bottom portion and having a groove formed on a first surface thereof and a plurality of spacers disposed in the groove, wherein two adjacent spacers in the groove form one concave hole;
a three dimensional layer, being disposed on the first surface of the installation portion, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the extrusion housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the extrusion housing, used for receiving the light emitted by the light-emittmg devices; and
a thermal conductive layer, being attached to the outer surface of the bottom of the extrusion housing.

9. The backlight module with three-dimensional circuit structure and extrusion housing of Claim 8, further comprising a bottom reflector, being disposed on the bottom of the light guide plate for preventing from light leakage.

10. The backlight module with three-dimensional circuit structure and extrusion housing of Claim 8, wherein the concave holes of the installation portion is made by using a processing method selected from the group consisting of: electrochemical machining process, impact process, drilling and boring process, extrusion process, and drawing process.

11. The backlight module with three-dimensional circuit structure and extrusion housing of Claim 8, wherein a through hole is formed on the bottom of the plurality of concave holes, respectively, adopted for desoldering the light-emitting devices.

12. The backlight module with three-dimensional circuit structure and extrusion housing of Claim 8, wherein a plurality of insulating films are formed on the bottoms of the plurality of concave holes, the insulating film is used for covering the non-welding district on the bottom of the concave hole.

13. The backlight module with three-dimensional circuit structure and extrusion housing of Claim 8, wherein the extrusion housing further comprises an extension portion, being connected with the installation portion and protruded outward from the first surface of the installation portion.

14. The backlight module with three-dimensional circuit structure and extrusion housing of Claim 8, wherein two thermal conductive materials are respectively disposed on the first surface of the installation portion and the outer surface of the extrusion housing, used for assisting in heat dissipation.

15. A backlight module with three-dimensional circuit structure and extrusion housing, comprising:
an extrusion housing, comprising:
a bottom portion;
at least one protrusion portion, being formed on the bottom portion; and
an installation portion, being connected with the bottom portion and having a plurality of spacers disposed on a first surface thereof, wherein two adjacent spacers in the groove form one concave hole;
a three dimensional layer, being disposed on the first surface of the installation portion, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the extrusion housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the extrusion housing, used for receiving the light emitted by the light-emitting devices; and
a thermal conductive layer, being attached to the outer surface of the bottom of the extrusion housing.

16. The backlight module with three-dimensional circuit structure and extrusion housing of Claim 15, further comprising a bottom reflector, being disposed on the bottom of the light guide plate for preventing from light leakage.

17. The backlight module with three-dimensional circuit structure and extrusion housing of Claim 15, wherein a through hole is formed on the bottom of the plurality of concave holes, respectively, adopted for desoldering the light-emitting devices.

18. The backlight module with three-dimensional circuit structure and extrusion housing of Claim 15, wherein a plurality of insulating films are formed on the bottoms of the plurality of concave holes, the insulating film is used for covering the non-welding district on the bottom of the concave hole.

19. The backlight module with three-dimensional circuit structure and extrusion housing of Claim 15, wherein the extrusion housing further comprises an extension portion, being connected with the installation portion and protruded outward from the first surface of the installation portion.

20. The backlight module with three-dimensional circuit structure and extrusion housing of Claim 15, wherein two thermal conductive materials are respectively disposed on the first surface of the installation portion and the outer surface of the extrusion housing, used for assisting in heat dissipation.
